# EUROPEAN PATENT SPECIFICATION

(11) **EP 4 523 371 B1**
(45) Date of publication and mention of the grant of the patent: **29.04.2026**
(21) Application number: 22733783.9
(22) Date of filing: 17.05.2022
(51) Int. Cl.: H04L 41/0816, H04L 9/40, H04W 84/06

(54) **METHOD AND APPARATUS FOR DETERMINING OPERATING PARAMETERS OF A WIRELESS ROUTER**
VERFAHREN UND VORRICHTUNG ZUR BESTIMMUNG DER BETRIEBSPARAMETER EINES DRAHTLOSEN ROUTERS
PROCÉDÉ ET DISPOSITIF POUR DÉTERMINER LES PARAMÈTRES DE FONCTIONNEMENT D'UN ROUTEUR SANS FIL

(43) Date of publication of application: 19.03.2025
(73) Proprietor: VIASAT INC., Carlsbad, California 92009 (US)
(72) Inventor: KOUTRAS, Jim P., Carlsbad, California 92009 (US); SCHAFER, Jeffrey V., Carlsbad, California 92009 (US); BOOSE, David, Carlsbad, California 92009 (US)
(74) Representative: Swindell & Pearson Limited
(86) International application number: PCT/US2022/029611
(87) International publication number: WO 2023/224606

(56) References cited:
- CA-A1- 2 547 405
- US-A1- 2019 373 022
- US-A1- 2021 176 123
- US-A1- 2022 086 671

## Description

### TECHNICAL FIELD

Methods and apparatus provide for operation of a wireless router, including changing the router from default settings to regional settings.

### BACKGROUND

A known approach to ensuring compliance with applicable regional restrictions on the frequency channels and transmit power used by a wireless router is to sell the router with a default configuration enabled that is compliant with the worst-case or most restrictive among a multiplicity of regional restrictions. Use of the default configuration ensures compliance with the applicable regional restrictions on frequencies and transmit power levels, regardless of the particular region in which the router is installed and used.

A subsequent challenge then lies in determining the particular region in which the router is used and, although there are various known approaches to determining the region in which a router is operating, these various approaches require specific capabilities of the router or depend on specific installation contexts. For example, one approach relies on the router including a dedicated Global Positioning System (GPS) receiver for independent determination of its location. Other approaches require the router to include a cellular receiver, for reception of cellular network signals and corresponding determination of its location from the cellular network signals. Still other approaches rely on sensing the local radio environment, e.g., for channels in use or to receive locally transmitted beacon signals that convey the needed information.

While such techniques are appropriate for certain types or classes of routers, or are otherwise practical in certain types of installations, they may be inappropriate or impractical in other scenarios. For example, at least some consumer-class routers, such as those integrated into home gateways or set-top boxes may have limited room or budget for additional sensing circuitry needed to obtain region-related information, or may be operated in installations where GPS signals, beacon signals, or the like are not available or reliable. Additionally, or alternatively, the router may use Internet Protocol (IP) addressing that complicates location determination, for example the router may use Carrier Grade Network Address Translation (CG-NAT) that involves translating between private and public IP addresses.

US 2021/0176123 A1 discloses automated configuration of a remote network.

US 2019/0373022 A1 relates to enhancing front panel security via a cloud network management system.

US 2022/0086671 A1 discloses a method and apparatus for communicating through a non-terrestrial network.

CA 2 547 405 A1 discloses a system and method for modifying router firmware.

### SUMMARY

The invention is defined in the appended claims. Methods and apparatus provide for operation of a wireless router, including changing the router from default settings to regional settings. Advantageous aspects of operation include the router obtaining an identifier of a satellite terminal device that provides Internet access for the router, exchanging internet messages with a remote node that returns to the router an indication of the region in which the satellite terminal device is located, and using the location of the satellite terminal device to select regional settings of the router.

An example embodiment comprises a method of operation by a wireless router. The method includes changing from operating with default settings to operating with regional settings. Changing from the default settings to the regional settings is based on (a) obtaining an Internet Protocol (IP) address and a terminal identifier from a satellite terminal device that is locally coupled to the wireless router, the satellite terminal device providing the wireless router with Internet access via a satellite communications network to which the satellite terminal device is connected, (b) sending an outgoing Internet message towards a remote node via the satellite terminal device, the remote node associated with an operator of the satellite communications network and the outgoing Internet message indicating the terminal identifier, (c) receiving an incoming Internet message from the remote node via the satellite terminal device, the incoming Internet message indicating a region in which the satellite terminal device is located, (d) selecting the regional settings based on the region indicated for the satellite terminal device, and (e) changing from operating with the default settings to operating with the regional settings. The "change" in the context of this disclosure relates to one or both of a radio transmission power of the wireless router and radio frequencies used by the wireless router.

Another example embodiment comprises a wireless router that includes communication interface circuitry and processing circuitry. The processing circuitry is operative to change from operating the wireless router with default settings to operating the wireless router with regional settings. Particularly, the processing circuitry is configured to (a) obtain, via the communication interface circuitry, an IP address and a terminal identifier from a satellite terminal device that is locally coupled to the communication interface circuitry of the wireless router, the satellite terminal device providing the wireless router with Internet access via a satellite communications network to which the satellite terminal device is connected, (b) send, via the communication interface circuitry, an outgoing Internet message towards a remote node via the satellite terminal device, the remote node associated with an operator of the satellite communications network and the outgoing Internet message indicating the terminal identifier, (c) receive, via the communication interface circuitry, an incoming Internet message sent from the remote node via the satellite terminal device, the incoming Internet message indicating a region in which the satellite terminal device is located, (d) select the regional settings based on the region indicated for the satellite terminal device, and (e) change from operating with the default settings to operating with the regional settings.

A further example embodiment comprises a method of operation by a node that is associated with an operator of a satellite communications network. The method includes the node (a) receiving an incoming Internet message originating from a remote wireless router that is coupled to the satellite communications network via a satellite terminal device that is local to the wireless router, the incoming Internet message indicating a terminal identifier of the satellite terminal device, and (b) determining a region in which the satellite terminal device is located, and sending an outgoing Internet message towards the wireless router, the outgoing Internet message indicating the region of the satellite terminal device.

A related example embodiment comprises a node that is associated with an operator of a satellite communications network. The node includes communication interface circuitry and processing circuitry. Particularly, the processing circuitry is configured to (a) receive, via the communication interface circuitry, an incoming Internet message originating from a remote wireless router that is coupled to the satellite communications network via a satellite terminal device that is local to the wireless router, the incoming Internet message indicating a terminal identifier of the satellite terminal device, (b) determine a region in which the satellite terminal device is located, and (c) send, via the communication interface circuitry, an outgoing Internet message towards the wireless router, the outgoing Internet message indicating the region of the satellite terminal device.

Of course, the present invention is not limited to the above features and advantages. Indeed, those skilled in the art will recognize additional features and advantages upon reading the following detailed description, and upon viewing the accompanying drawings.

### BRIEF DESCRIPTION OF THE DRAWINGS

Figure 1 is a block diagram of a wireless router and a network node according to an example embodiment wherein a satellite terminal device and an associated satellite communication network provide for Internet communication between the wireless router and the network node.
Figure 2 is a signal flow diagram depicting example signaling between a wireless router and a network node, and between the wireless router and a satellite terminal device that provides the wireless router with Internet access.
Figure 3 is a logic flow diagram of a method of operating a wireless router, according to an example embodiment.
Figure 4 is a logic flow diagram of a method of operating a network node, according to an example embodiment.
Figure 5 is a block diagram of processing circuitry of a wireless router according to an example embodiment.
Figure 6 is a block diagram of processing circuitry of a wireless router according to an example embodiment.

### DETAILED DESCRIPTION

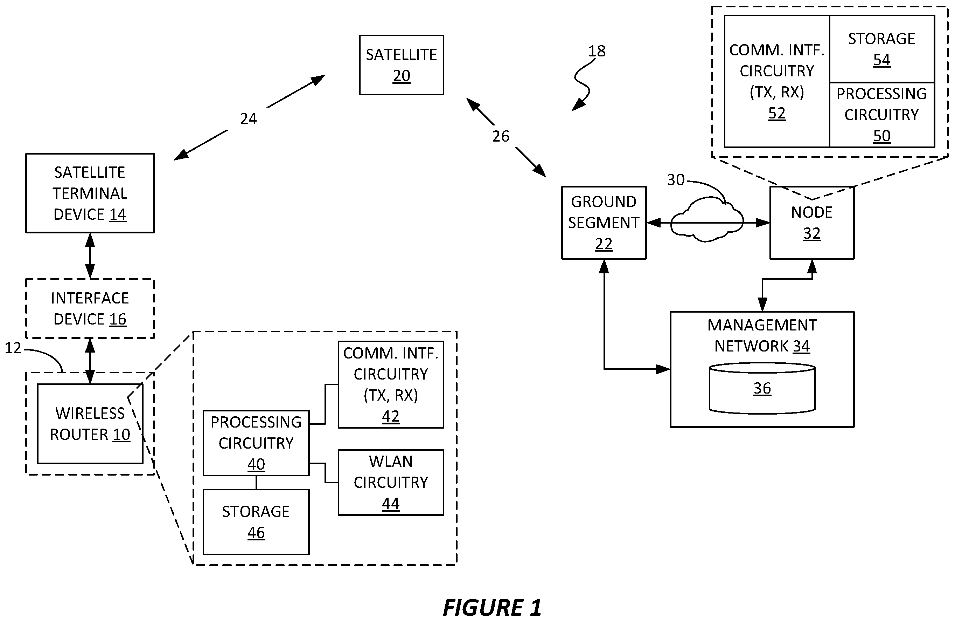

Figure 1 illustrates a wireless router 10 according to one or more example embodiments and in at least one such embodiment the wireless router 10 is comprised in or integrated into a home gateway device 12, such as used to provide Internet and related multimedia services to a premises. Rather than connecting to the Internet directly, the wireless router 10 is configured for local coupling to a satellite terminal device 14, possibly through an interface device 16. As an example, the interface device 16 is a Power-over-Ethernet (PoE) device that provides power to the wireless router 10 whilst also providing a local communication link between the wireless router 10 and the satellite terminal device 14. As another example, the interface device 16 implements a Multimedia over Coax Alliance (MoCA) protocol.

The satellite terminal device 14 comprises or includes outdoor equipment, such as an antenna assembly for transmitting uplink signals to one or more satellites 20 of a satellite communications network 18 and receiving downlink signals from the one or more satellites 20. Broadly, the satellite communications network 18 provides or makes available one or more types of communication services, such as broadband multimedia. Wireless connections between the satellites 20 and respective satellite terminal devices 14 are referred to as user links 24 and wireless connections between the satellites 20 and a ground segment 22 of the satellite communications network 18 are referred to as feeder links 26. The ground segment 22 connects with the Internet 30, which provides communicative coupling to a network node 32, which has access to a network management device or network 34 that maintains one or more databases 36 that contain information relevant to satellite terminal devices 14, e.g., such as any one or more of corresponding identifiers, authorizations or credentials, location information, etc.

In at least one embodiment, or according to at least one operating scenario, the wireless router 10 is incapable of determining its location or its configuration makes impractical determining its location from network addresses. For example, the wireless router 10 uses Carrier Grade Network Address Translation (CG-NAT), with the use of private Internet Protocol (IP) addresses complicating address-based determination of the location of the wireless router 10. Additionally, or in an alternative operating scenario or embodiment, the wireless router 10 omits Global Positioning System (GPS) or Global Navigation Satellite System (GNSS) receivers and further omits local or wide-area radio scanning capability, which might be used to detect and receive radio signals from external systems that include location cues. Correspondingly, according to an advantageous configuration of the wireless router 10, the wireless router 10 performs inferential localization, based on determining an identity of the satellite terminal device 14 with which it has a local connection, and communicating that identity to the network node 32 via Internet messaging.

In complementary fashion, the network node 32, acting as a remote, Internet-accessible node from the perspective of the wireless router 10, uses the communicated identity to identify the satellite terminal device 14 and determine the geographic region in which the satellite terminal device 14 is located. For example, the node 32 queries the one or more databases 36 using the communicated identity or information derived therefrom and obtains location information for the satellite terminal device 14 in response to the query. Figure 1 depicts example embodiments of the wireless router 10 and network node 32 in the context of such operations.

The example wireless router 10 comprises processing circuitry 40, communication interface circuitry 42, e.g., an Ethernet or other transceiver comprising transmit (TX) and receive (RX) circuitry. Further, the wireless router 10 comprises Wireless Local Area Network (WLAN) circuitry 44, which is configured to provide local wireless network services, e.g., according to Wi-Fi 6 or other standardized WLAN network protocols. For example, the WLAN circuitry 44 comprises a QUALCOMM chipset, such as the IPQ8072a chipset, which permits the use of different radio settings for Wi-Fi operation. In such examples and in one or more other embodiments, the processing circuitry 40 may be subsumed in or otherwise implemented by the processing circuitry included in the WLAN circuitry 44.

Still further, the wireless router 10 includes storage 46, which comprises one or more types of computer-readable media. The storage 46 includes, for example, one or more types of non-volatile memory circuits that store settings for operation of the wireless router 10. These settings comprise, for example, tables or other data structures that define which radio channels (frequencies) or frequency bands are permitted for use in respective regions. Additionally, or alternatively, the settings indicate transmit power levels permitted for the wireless router 10 on a per region basis. Stored settings may also include a default set of settings that are compliant with the most restrictive among the regional settings or otherwise conform to a subset of settings that are common across all regions. Alternatively, the default set of settings may be determined dynamically by the processing circuitry 40, based on comparing the regional settings.

In an example embodiment, the processing circuitry 40 is operative to change from operating the wireless router with default settings to operating the wireless router with regional settings. Such functionality is based on the processing circuitry 40 being configured to obtain, via the communication interface circuitry 42, an Internet Protocol (IP) address and a terminal identifier from a satellite terminal device 14 that is locally coupled to the communication interface circuitry 42 of the wireless router 10. "Locally coupled" refers to co-location of the wireless router 10 and satellite terminal device 14, such that a physical wired connection or short-range wireless connection provides communicative coupling between the wireless router 10 and the satellite terminal device 14. As an example, the satellite terminal device 14 is an outdoor unit installed at a residential or commercial premises and the wireless router 10 is an indoor unit installed at the same premises or is comprised in a home gateway device 12 or other indoor unit installed in the same premises.

The satellite terminal device 14 provides the wireless router 10 with Internet access via a satellite communications network 18 to which the satellite terminal device 14 is connected. Correspondingly, the processing circuitry 40 of the wireless router 10 is configured to send, via the communication interface circuitry 42, an outgoing Internet message towards a remote node via the satellite terminal device 14. The remote node-e.g., the node 32 depicted in Figure 1-is associated with an operator of the satellite communications network 18 and the outgoing Internet message indicates the terminal identifier. "Remote" in this context means at a different geographic location, such that the remote node is reachable via Internet access provided through the satellite communications network 18. The node 32 may provide or otherwise operate as a point of presence (POP) that supports determination by the wireless router 10 of the region in which its locally-coupled satellite terminal device 14 is located.

The processing circuitry 40 of the wireless router 10 is further configured to receive, via the communication interface circuitry 42, an incoming Internet message sent from the remote node 32 via the satellite terminal device 14, with the incoming Internet message indicating a region in which the satellite terminal device 14 is located. The processing circuitry 40 is configured to select the regional settings for the wireless router 10 based on the region indicated for the satellite terminal device 14 and change from operating with the default settings to operating with the regional settings. The change relates to one or both of a radio transmission power of the wireless router 10 and radio frequencies used by the wireless router 10.

In at least one embodiment, the incoming Internet message includes a credential, and the processing circuitry 40 of the wireless router 10 is configured to use the credential to establish a secure connection with the remote node. For example, the secure connection is established and operated according to the TR-369 protocol, also referred to as "User Services Platform." In at least one such embodiment, the processing circuitry 40 is configured to re-establish the secure connection with the remote node responsive to disruption of the secure connection, re-obtain a terminal identifier from a satellite terminal device 14 that is then locally coupled to the wireless router 10, and continue to use the regional settings in response to receiving, via the re-established secure connection, information from the remote node that indicates that the region has not changed.

Reference to a "then locally coupled" satellite terminal device 14 means the satellite terminal device 14 that is coupled to the wireless router 10 at that particular time. In the example context of losing and then re-establishing the secure connection, re-obtaining the terminal identifier from the then locally coupled satellite terminal device 14 ensures that the wireless router 10 has not somehow been reconnected to a new or changed satellite terminal device 14 in the time between losing the secure connection and attempting to reestablish the secure connection.

In response to loss of the secure connection, the processing circuitry 40 in one or more embodiments is configured to continue to operate the wireless router 10 with the regional settings until the wireless router is powered off or reboots. Here, "reboot" refers to a resetting or reinitialization of the processing circuitry 40, such as happens when power is cycled, when a watchdog timer expires, or when a reset command is received or a reset signal is asserted. Reset commands may be received from the remote node, or from another external source.

To obtain the IP address and the terminal identifier, the processing circuitry 40 in one or more embodiments is configured to perform a Dynamic Host Configuration Protocol (DHCP) procedure towards the satellite terminal device 14 to obtain the IP address and, separately, query the satellite terminal device 14 via Hypertext Transfer Protocol Secure (HTTPS) for the terminal identifier. The processing circuitry 40 is configured to obtain the terminal identifier as a Medium Access Control (MAC) address of the satellite terminal device 14, for example, or as an identifier that is based on the MAC address of the satellite terminal device 14.

The processing circuitry 40 in one or more embodiments is configured to revert the wireless router 10 from operating with the regional settings to operating with the default settings, upon rebooting of the wireless router 10. Additionally or alternatively, the processing circuitry 40 is configured to revert from operating the wireless router 10 with the regional settings to operating the wireless router 10 with the default settings, responsive to any one or more of: receiving a reset signal, detecting that the wireless router 10 has been connected to a new satellite terminal device 14, or detecting, during a power-on procedure of the wireless router 10, that the wireless router 10 was powered off for more than a defined duration.

As an example of the aforementioned remote node, the node 32 depicted in Figure 1 includes processing circuitry 50, communication interface circuitry 52, and storage 54. The communication interface circuitry 52 comprises, for example, an Ethernet or other computer data network interface, and includes physical-layer circuitry for wireless or wired transmission and reception over a physical medium. Included in the communication interface circuitry 52 are receiver and transmitter circuitry, for transmitting outgoing Internet messages and receiving incoming Internet messages. The storage 54 comprises one or more types of computer-readable media, such as one or more types of memory circuits or devices.

The node 32 is associated with an operator of a satellite communications network 18 and the processing circuitry 50 is configured to: (a) receive, via the communication interface circuitry 52, an incoming Internet message originating from a remote wireless router 10 that is coupled to the satellite communications network 18 via a satellite terminal device 14 that is local to the wireless router 10, the incoming Internet message indicating a terminal identifier of the satellite terminal device 14; (b) determine a region in which the satellite terminal device 14 is located; and (c) send, via the communication interface circuitry 52, an outgoing Internet message towards the wireless router 10, the outgoing Internet message indicating the region of the satellite terminal device 14. A "country code" included in the outgoing Internet message represents the region information, for example. Country code information may conform to ISO 3166 standards, for example.

The processing circuitry 50 in one or more embodiments is further configured to send the outgoing Internet message conditioned on the satellite terminal device 14 being an authorized satellite terminal device.

Further, in one or more embodiments, the processing circuitry 50 is further configured to: include a credential in the outgoing Internet message; and subsequently establish a secure connection with the wireless router 10, based on the credential. In at least one such embodiment, the processing circuitry 50 is configured to attempt re-establishment of the secure connection responsive to a disruption of the secure connection and, responsive to re-establishment of the secure connection, receive a terminal identifier from the wireless router 10 for a satellite terminal device 14 to which the wireless router 10 is then connected, and send an indication of the region in which the then-connected satellite terminal device 14 is located. Such operations ensure that the satellite terminal device 14 used to establish the secure connection is the same one used to re-establish the secure connection, or at least ensure that it is in the same region.

The processing circuitry 50 is configured to determine the region in which the satellite terminal device 14 is located based on, for example, determining a beam identity of a serving beam of the satellite terminal device 14 in the satellite communications network 18. Because respective beams used by the satellite communications system 18 provide service coverage in corresponding, known geographic areas, knowing which beam provides service to the satellite terminal device 14 is tantamount to knowing the geographic area in which the satellite terminal device 14 is located. In particular, installation and configuration of the satellite terminal device 14 may include calibration to "find" the beam center of the serving beam, and such information provides for at least region-accurate determination of the location of the satellite terminal device 14.

The processing circuitry 50 in another embodiment or according to another operating scenario is configured to determine the region in which the satellite terminal device 14 is located by accessing a database 36 that links terminal identifiers with the regions in which corresponding satellite terminal devices 14 are located.

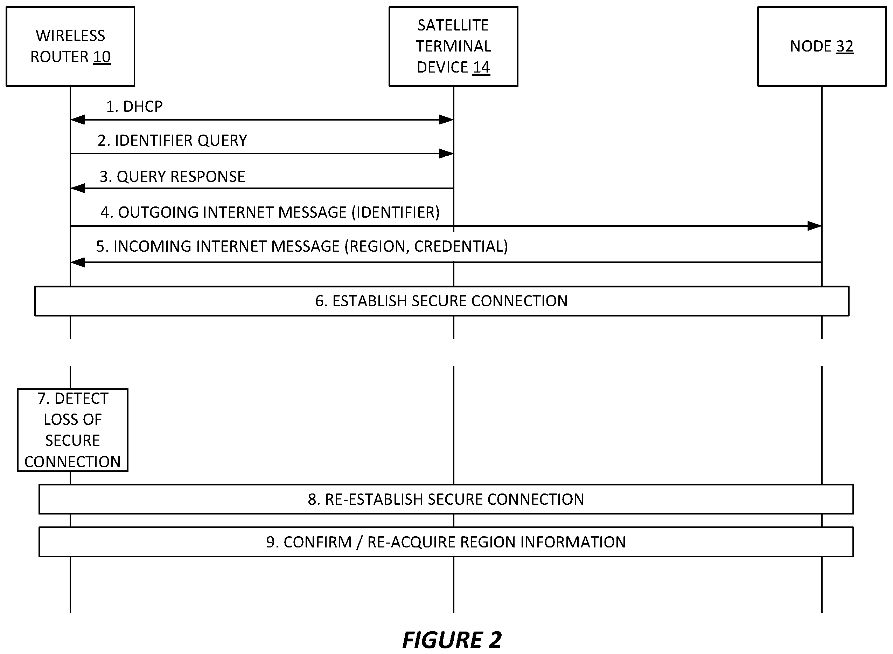

Figure 2 illustrates one example of signaling involving a wireless router 10, a satellite terminal device 14, and a remote node 32, and by which the wireless router 10 "regionalizes" its settings for wireless operations. Note that Figure 2 does not show any interface device 16 between the wireless router 10 and the satellite terminal device 14 and omits any signal/protocol translations that may occur between them.

At step 1, the wireless router 10 and the satellite terminal device 14 perform a DHCP procedure, resulting in the assignment of an IP address to the wireless router 10. At step 2, the wireless router 10 queries the satellite terminal device 14 for a terminal identifier of the satellite terminal device 14, e.g., sending a HyperText Transfer Protocol Secure (HTTPS) query, and receives a corresponding query response at step 3. The wireless router 10 at step 4 sends an outgoing Internet message that includes the terminal identifier of the satellite terminal device 14, where that message is directed towards the remote node 32 and where the remote node 32 uses the terminal identifier to derive or otherwise obtain region information for the satellite terminal device 14.

At step 5, the wireless router 10 receives an incoming Internet message sent from the remote node 32, where the incoming message indicates the region in which the satellite terminal device 14 is located. In one or more embodiments, the incoming message also contains a credential, such as a secure token, key, or other item of data, to be used by the wireless router 10 for establishing a secure connection to the remote node 32. Step 6 depicts establishment of the secure connection, based on the credential.

At some later time, a disruption of the secure connection occurs and at step 7 the wireless router 10 detects the loss of the secure connection. Disruption occurs, for example, because of satellite connectivity issues experienced by the satellite terminal device 14, or problems affecting the local communication coupling between the satellite terminal device 14 and the wireless router 10.

At step 8, the wireless router 10 and the remote node 32 re-establish the secure connection, again based on the credential, and at step 9 the wireless router 10 confirms that it remains connected to the same satellite terminal device 14 or that the satellite terminal device 14 to which it is now connected is in the same region as the satellite terminal device 14 through which the wireless router 10 established the secure connection. For example, after re-establishing the secure connection, the wireless router 10 queries the satellite terminal device 14 to which it is currently connected for its terminal identifier, and it sends that terminal identifier to the remote node 32. Correspondingly, the remote node 32 returns an indication of the region associated with the satellite terminal device 14 identified by that terminal identifier. Such operations cover scenarios where the wireless router 10 establishes the secure connection through a first satellite terminal device 14 and is then disconnected from that device and reconnected to another satellite terminal device 14.

With Figure 2 offering a specific signaling example, it should be understood that in one or more embodiments, upon the wireless router 10 coming online, it reaches out to the network node 32 for "device management" support, with the network node 32 providing a publicly accessible HTTPS POP. For example, the wireless router 10 POSTs a device announcement that includes its router information, such as Serial ID, Base MAC Address, Firmware Version, and any unique identifier assigned if it has previously registered with the network node 32. The wireless router 10 further provides WAN information associated with it, which includes its WAN IP Address and the terminal identifier of the satellite terminal device 14, which may be a Gateway MAC address, for example.

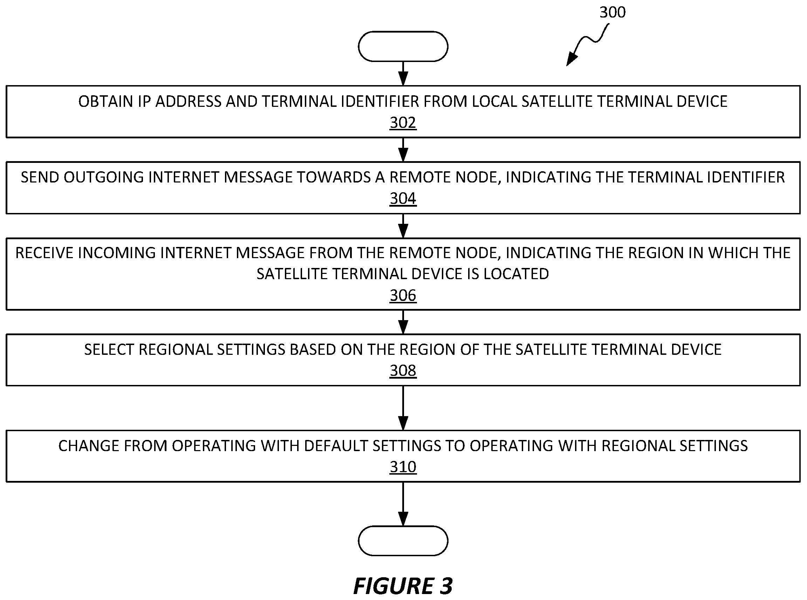

Figure 3 illustrates a method 300 of operation by a wireless router 10 according to an example embodiment. The method 300 comprises changing from operating with default settings to operating with regional settings, based on: (a) obtaining (Block 302) an IP address and a terminal identifier from a satellite terminal device 14 that is locally coupled to the wireless router 10, the satellite terminal device 14 providing the wireless router 10 with Internet access via a satellite communications network 18 to which the satellite terminal device 14 is connected; (b) sending (Block 304) an outgoing Internet message towards a remote node 32 via the satellite terminal device 14, the remote node 32 associated with an operator of the satellite communications network 18 and the outgoing Internet message indicating the terminal identifier; (c) receiving (Block 306) an incoming Internet message from the remote node 32 via the satellite terminal device 14, the incoming Internet message indicating a region in which the satellite terminal device 14 is located; (d) selecting (Block 308) the regional settings based on the region indicated for the satellite terminal device 14; and (e) changing (Block 310) from operating with the default settings to operating with the regional settings, wherein the change relates to one or both of a radio transmission power of the wireless router 10 and radio frequencies used by the wireless router 10.

The incoming Internet message includes a credential, for example, and the method 300 in one or more embodiments further includes using the credential to establish a secure connection with the remote node 32. Further, in at least one such embodiment, the method 300 further includes re-establishing the secure connection with the remote node 32 responsive to disruption of the secure connection, re-obtaining a terminal identifier from a satellite terminal device 14 that is then locally coupled to the wireless router 10, and continuing to use the regional settings in response to receiving, via the re-established secure connection, information from the remote node 32 that indicates that the region has not changed. Such embodiments may further include, in response to loss of the secure connection, the wireless router 10 continuing to use the regional settings until the wireless router 10 reboots or is powered off.

Obtaining the IP address and the terminal identifier from the satellite terminal device 14 comprises, for example, the wireless router 10 performing a DHCP procedure towards the satellite terminal device 14 to obtain the IP address and, separately, querying the satellite terminal device 14 via HTTPS for the terminal identifier. The terminal identifier comprises, for example, a MAC address of the satellite terminal device 14, or an identifier derived from the MAC identifier of the satellite terminal device 14.

In one or more embodiments, the method 300 further includes the wireless router 10 reverting from the regional settings to the default settings upon one or more events or satisfaction of one or more conditions, including any one or more of the following: upon rebooting, responsive to receiving a reset signal, detecting that the wireless router 10 has been connected to a new satellite terminal device 14, or, responsive to detecting, during a power-on procedure of the wireless router 10, that the wireless router 10 was powered off for more than a defined duration.

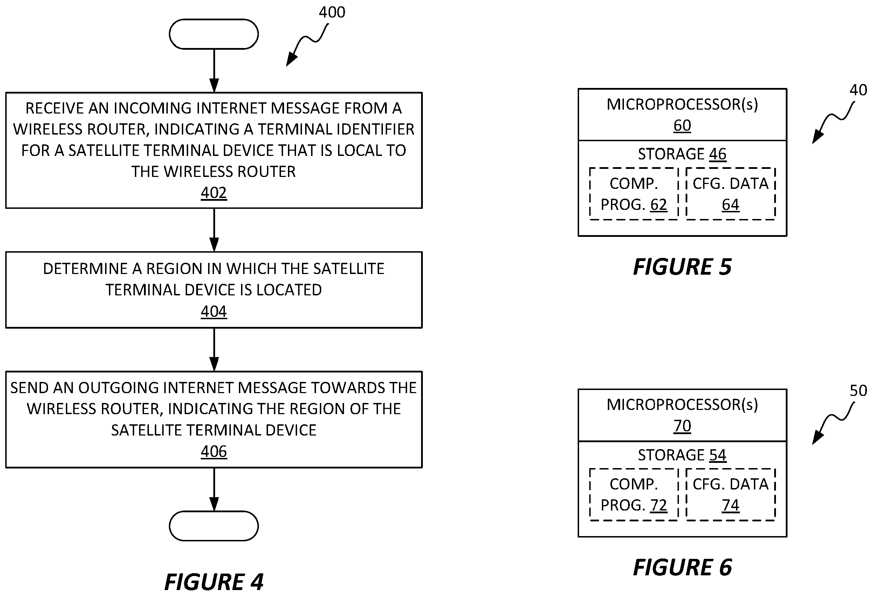

Figure 4 illustrates a method 400 of operation by a remote node 32 according to an example embodiment, where the remote node 32 is associated with an operator of a satellite communications network 18. The method 400 comprises: (a) receiving (Block 402) an incoming Internet message originating from a wireless router 10 that is coupled to the satellite communications network 18 via a satellite terminal device 14 that is local to the wireless router 10, the incoming Internet message indicating a terminal identifier of the satellite terminal device 14; (b) determining (Block 404) a region in which the satellite terminal device 14 is located; and (c) sending (Block 406) an outgoing Internet message towards the wireless router 10, the outgoing Internet message indicating the region of the satellite terminal device 14.

According to one or more embodiments of the method 400, sending the outgoing Internet message is conditioned on the satellite terminal device 14 being an authorized satellite terminal device. The method 400 may also include the node 32 including a credential in the outgoing Internet message, and subsequently establishing a secure connection with the wireless router 10, based on the credential. In at least one such embodiment, the method 400 further includes the node 32 attempting re-establishment of the secure connection responsive to a disruption of the secure connection and, responsive to re-establishment of the secure connection, receiving a terminal identifier from the wireless router 10 for a satellite terminal device 14 to which the wireless router 10 is then connected, and sending an indication of the region in which the then-connected satellite terminal device 14 is located.

The node 32 determines the region in which the satellite terminal device 14 is located, for example, based on determining a beam identity of a serving beam of the satellite terminal device 14 in the satellite communications network 18. Alternatively, e.g., in a different embodiment or according to other operating circumstances, the region in which the satellite terminal device 14 is located is determined by the node 32 based on the node 32 accessing a database 36 that links terminal identifiers with the regions in which the corresponding satellite terminal devices 14 are located. In yet another embodiment, the node 32 uses a location reported by the satellite terminal device 14, e.g., such as where the satellite terminal device 14 includes a GPS receiver.

Figure 5 illustrates an example embodiment of the processing circuitry 40 of the wireless router 10, wherein the processing circuitry 40 comprises one or more microprocessors or other digital processors 60 that is/are specially adapted to carry out the operations described herein for the wireless router 10, based on the execution of computer program instructions 62 stored in the storage 46. Storage 46 comprises, for example, non-volatile memory circuits for longer term storage of the computer program instructions 62, along with volatile memory circuits as working memory for program execution, data processing, etc. The storage 46 may further include configuration data 64, such as information comprising regional settings, default settings, etc. Example memory circuits include SRAM, DRAM, FLASH, EEPROM, etc.

Figure 6 illustrates an example embodiment of the processing circuitry 50 of the network node 32, wherein the processing circuitry 50 comprises one or more microprocessors or other digital processors 70 that is/are specially adapted to carry out the operations described herein for the network node 32, based on the execution of computer program instructions 72 stored in the storage 54. Storage 54 comprises, for example, non-volatile memory circuits for longer term storage of the computer program instructions 72, along with volatile memory circuits as working memory for program execution, data processing, etc. The storage 54 may further include configuration data 74, such as information comprising satellite network information, such as database-access information used for accessing the database(s) 36 to obtain region information for satellite terminal devices 14.

Notably, modifications and other embodiments of the disclosed invention(s) will come to mind to one skilled in the art having the benefit of the teachings presented in the foregoing descriptions and the associated drawings. Therefore, it is to be understood that the invention(s) is/are not to be limited to the specific embodiments disclosed and that modifications and other embodiments are intended to be included within the scope of this disclosure. Although specific terms may be employed herein, they are used in a generic and descriptive sense only and not for purposes of limitation.

## Claims

1. A method of operation by a wireless router (10), the method comprising:
changing the wireless router from operating with default settings to operating with regional settings, based on:
performing, by the wireless router and a satellite terminal device (14), an Internet Protocol, IP, address assignment for the wireless router;
obtaining (302) a terminal identifier of the satellite terminal device that is locally coupled to the wireless router, the satellite terminal device providing the wireless router with Internet access via a satellite communications network (18) to which the satellite terminal device is connected;
sending (304) an outgoing Internet message towards a remote node via the satellite terminal device, the remote node associated with an operator of the satellite communications network and the outgoing Internet message indicating the terminal identifier of the satellite terminal device;
receiving (306), in response to sending the outgoing Internet message, an incoming Internet message from the remote node via the satellite terminal device, the incoming Internet message indicating a region in which the satellite terminal device is located;
selecting (308) the regional settings based on the region indicated in which the satellite terminal device is located; and
changing (310) from operating with the default settings to operating with the regional settings, wherein the change relates to one or both of a radio transmission power of the wireless router and radio frequencies used by the wireless router.

2. The method of claim 1, wherein the incoming Internet message includes a credential, and wherein the method further includes using the credential to establish a secure connection with the remote node, and wherein, optionally, the method further comprises:
re-establishing the secure connection with the remote node responsive to disruption of the secure connection, re-obtaining a terminal identifier from a satellite terminal device (14) that is then locally coupled to the wireless router, and continuing to use the regional settings in response to receiving, via the re-established secure connection, information from the remote node that indicates that the region has not changed.

3. The method of claim 2, further comprising, responsive to loss of the secure connection, continuing to use the regional settings until the wireless router reboots or is powered off.

4. The method of any one of claims 1-3, wherein performing the IP address assignment comprises performing a Dynamic Host Configuration Protocol, DHCP, procedure towards the satellite terminal device to obtain the IP address and obtaining the terminal identifier comprises querying the satellite terminal device via Hypertext Transfer Protocol Secure, HTTPS, for the terminal identifier.

5. The method of any one of claims 1-4, wherein obtaining the terminal identifier comprises obtaining a Medium Access Control, MAC, address of the satellite terminal device or obtaining an identifier that is based on the MAC address of the satellite terminal device.

6. The method of any one of claims 1-5, further comprising reverting from the regional settings to the default settings upon rebooting.

7. The method of claim 1, further comprising:
reverting from the regional settings to the default settings responsive to receiving a reset signal;
reverting from the regional settings to the default settings responsive to detecting that the wireless router has been connected to a new satellite terminal device; or
reverting from the regional settings to the default settings responsive to detecting, during a power-on procedure of the wireless router, that the wireless router was powered off for more than a defined duration.

8. A wireless router (10) comprising:
communication interface circuitry (42); and
processing circuitry (40) that is operative, with the communication interface circuitry, to perform the method of one or more of claims 1 to 7.

9. A method of operation by a node that is associated with an operator of a satellite communications network (18), the method comprising:
receiving (402) an incoming Internet message originating from a remote wireless router that is coupled to the satellite communications network via a satellite terminal device that is local to the wireless router, the incoming Internet message indicating a terminal identifier of the satellite terminal device;
determining (404) a region in which the satellite terminal device is located; and
sending (406) an outgoing Internet message, in response to receiving the incoming Internet message, towards the wireless router, the outgoing Internet message indicating the region of the satellite terminal device and enabling the wireless router to change from operating with default settings to operating with regional settings based on the indicated region of the satellite terminal device.

10. The method of claim 9, further comprising sending the outgoing Internet message conditioned on the satellite terminal device being an authorized satellite terminal device.

11. The method of claim 9 or 10, further comprising:
including a credential in the outgoing Internet message; and
subsequently establishing a secure connection with the wireless router, based on the credential.

12. The method of claim 11, further comprising attempting re-establishment of the secure connection responsive to a disruption of the secure connection and, responsive to re-establishment of the secure connection, receiving a terminal identifier from the wireless router for a satellite terminal device to which the wireless router is then connected, and sending an indication of the region in which the then-connected satellite terminal device is located.

13. The method of any one of claims 9-12, further comprising determining the region in which the satellite terminal device is located based on determining a beam identity of a serving beam of the satellite terminal device in the satellite communications network.

14. The method of any one of claims 9-12, further comprising determining the region in which the satellite terminal device is located by accessing a database that links terminal identifiers with the regions in which the corresponding satellite terminal devices are located.

15. A node (32) that is associated with an operator of a satellite communications network (18), the node comprising:
communication interface circuitry (52); and
processing circuitry (50) configured, with the communication interface circuitry, to perform the method of one or more of claims 9 to 14.

## Patentansprüche

1. Betriebsverfahren durch einen drahtlosen Router (10), wobei das Verfahren umfasst:
Umstellen des drahtlosen Routers vom Betrieb mit Standardeinstellungen auf den Betrieb mit regionalen Einstellungen, basierend auf dem:
Durchführen, durch den drahtlosen Router und ein Satellitenendgerät (14), einer Internetprotokoll-, IP-, Adresszuweisung für den drahtlosen Router;
Erhalten (302) einer Endgerätkennung des Satellitenendgeräts, das lokal an den drahtlosen Router gekoppelt ist, wobei das Satellitenendgerät dem drahtlosen Router den Internetzugang über ein Satellitenkommunikationsnetzwerk (18), mit dem das Satellitenendgerät verbunden ist, bereitstellt;
Senden (304) einer ausgehenden Internetnachricht hin zu einem Remote-Knoten über das Satellitenendgerät, wobei der Remote-Knoten mit einem Betreiber des Satellitenkommunikationsnetzwerks assoziiert ist und die ausgehende Internetnachricht die Endgerätkennung des Satellitenendgeräts angibt;
Empfangen (306), als Reaktion auf das Senden der ausgehenden Internetnachricht, einer eingehenden Internetnachricht aus dem Remote-Knoten über das Satellitenendgerät, wobei die eingehende Internetnachricht eine Region angibt, in der das Satellitenendgerät befindlich ist;
Auswählen (308) der regionalen Einstellungen basierend auf der angegebenen Region, in der das Satellitenendgerät befindlich ist; und
Umstellen (310) vom Betrieb mit den Standardeinstellungen auf den Betrieb mit den regionalen Einstellungen, wobei sich die Umstellung auf eines oder beide von einer Funksendeleistung des drahtlosen Routers und Funkfrequenzen, die von dem drahtlosen Router verwendet werden, bezieht.

2. Verfahren nach Anspruch 1, wobei die eingehende Internetnachricht ein Credential beinhaltet und wobei das Verfahren ferner das Verwenden des Credentials zum Herstellen einer sicheren Verbindung mit dem Remote-Knoten beinhaltet und wobei, optional, das Verfahren ferner umfasst:
Wiederherstellen der sicheren Verbindung mit dem Remote-Knoten als Reaktion auf die Störung der sicheren Verbindung, Wiedererlangen einer Endgerätkennung aus einem Satellitenendgerät (14), das dann lokal an den drahtlosen Router gekoppelt ist, und Fortsetzen der Verwendung der regionalen Einstellungen als Reaktion auf das Empfangen, über die wiederhergestellte sichere Verbindung, von Informationen aus dem Remote-Knoten, die angeben, dass sich die Region nicht geändert hat.

3. Verfahren nach Anspruch 2, ferner umfassend, als Reaktion auf den Verlust der sicheren Verbindung, das Fortsetzen der Verwendung der regionalen Einstellungen, bis sich der drahtlose Router erneut bootet oder ausgeschaltet wird.

4. Verfahren nach einem der Ansprüche 1-3, wobei das Durchführen der IP-Adresszuweisung das Durchführen eines Dynamic-Host-Configuration-Protocol-, DHCP-, Verfahrens hin zu dem Satellitenendgerät umfasst, um die IP-Adresse zu erhalten, und das Erhalten der Endgerätkennung das Abfragen des Satellitenendgeräts per Hypertext Transfer Protocol Secure, HTTPS, nach der Endgerätkennung umfasst.

5. Verfahren nach einem der Ansprüche 1-4, wobei das Erhalten der Endgerätkennung das Erhalten einer Medium-Access-Control-, MAC-, Adresse, des Satellitenendgeräts oder das Erhalten einer Kennung, die auf der MAC-Adresse des Satellitenendgeräts basiert, umfasst.

6. Verfahren nach einem der Ansprüche 1-5, ferner umfassend das Zurückkehren von den regionalen Einstellungen zu den Standardeinstellungen beim Rebooting.

7. Verfahren nach Anspruch 1, ferner umfassend:
Zurückkehren von den regionalen Einstellungen zu den Standardeinstellungen als Reaktion auf das Empfangen eines Rücksetzsignals;
Zurückkehren von den regionalen Einstellungen zu den Standardeinstellungen als Reaktion auf das Erkennen, dass der drahtlose Router mit einem neuen Satellitenendgerät verbunden wurde; oder
Zurückkehren von den regionalen Einstellungen zu den Standardeinstellungen als Reaktion auf das Erkennen, während eines Einschaltvorgangs des drahtlosen Routers, dass der drahtlose Router für mehr als eine definierte Dauer ausgeschaltet war.

8. Drahtloser Router (10), umfassend:
Kommunikationsschnittstellenschaltungen (42); und
Verarbeitungsschaltungen (40), die, mit den Kommunikationsschnittstellenschaltungen, dazu betriebsbereit sind, das Verfahren nach einem oder mehreren der Ansprüche 1 bis 7 durchzuführen.

9. Betriebsverfahren durch einen Knoten, der mit einem Betreiber eines Satellitenkommunikationsnetzwerks (18) assoziiert ist, wobei das Verfahren umfasst:
Empfangen (402) einer eingehenden Internetnachricht, die aus einem drahtlosen Remote-Router stammt, der an das Satellitenkommunikationsnetzwerk über ein Satellitenendgerät gekoppelt ist, das lokal zu dem drahtlosen Router ist, wobei die eingehende Internetnachricht eine Endgerätkennung des Satellitenendgeräts angibt;
Bestimmen (404) einer Region, in der das Satellitenendgerät befindlich ist; und
Senden (406) einer ausgehenden Internetnachricht, als Reaktion auf das Empfangen der eingehenden Internetnachricht, hin zu dem drahtlosen Router, wobei die ausgehende Internetnachricht die Region des Satellitenendgeräts angibt und ermöglicht, dass der drahtlose Router, basierend auf der angegebenen Region des Satellitenendgeräts, sich vom Betrieb mit Standardeinstellungen auf den Betrieb mit regionalen Einstellungen umstellt.

10. Verfahren nach Anspruch 9, ferner umfassend das Senden der ausgehenden Internetnachricht, die davon abhängig ist, dass das Satellitenendgerät ein autorisiertes Satellitenendgerät ist.

11. Verfahren nach Anspruch 9 oder 10, ferner umfassend:
Einbeziehen eines Credentials in der ausgehenden Internetnachricht; und
anschließendes Aufbauen einer sicheren Verbindung mit dem drahtlosen Router, basierend auf dem Credential.

12. Verfahren nach Anspruch 11, ferner umfassend die versuchte Wiederherstellung der sicheren Verbindung als Reaktion auf eine Störung der sicheren Verbindung und, als Reaktion auf die Wiederherstellung der sicheren Verbindung, das Empfangen einer Endgerätkennung aus dem drahtlosen Router für ein Satellitenendgerät, mit dem der drahtlose Router dann verbunden ist, und das Senden einer Angabe der Region, in der das dann verbundene Satellitenendgerät befindlich ist.

13. Verfahren nach einem der Ansprüche 9-12, ferner umfassend das Bestimmen der Region, in der das Satellitenendgerät befindlich ist, basierend auf dem Bestimmen einer Strahlidentität eines Dienststrahls des Satellitenendgeräts in dem Satellitenkommunikationsnetzwerk.

14. Verfahren nach einem der Ansprüche 9-12, ferner umfassend das Bestimmen der Region, in der das Satellitenendgerät befindlich ist, durch Zugreifen auf eine Datenbank, die Endgerätkennungen mit den Regionen verknüpft, in denen sich die entsprechenden Satellitenendgeräte befinden.

15. Knoten (32), der mit einem Betreiber eines Satellitenkommunikationsnetzwerks (18) assoziiert ist, wobei der Knoten umfasst:
Kommunikationsschnittstellenschaltungen (52); und
Verarbeitungsschaltungen (50), die dazu konfiguriert sind, mit den Kommunikationsschnittstellenschaltungen, das Verfahren nach einem oder mehreren der Ansprüche 9 bis 14 durchzuführen.

## Revendications

1. Procédé de fonctionnement au moyen d'un routeur sans fil (10), le procédé comprenant :
l'entraînement du routeur sans fil à passer d'un fonctionnement avec des paramètres par défaut à un fonctionnement avec des paramètres régionaux, sur la base de :
la réalisation, par le routeur sans fil et un dispositif terminal satellite (14), d'une attribution d'adresse de protocole internet, IP, pour le routeur sans fil ;
l'obtention (302) d'un identifiant de terminal du dispositif terminal satellite qui est localement couplé au routeur sans fil, le dispositif terminal satellite fournissant au routeur sans fil un accès internet par l'intermédiaire d'un réseau de communications par satellite (18) auquel le dispositif terminal satellite est connecté ;
l'envoi (304) d'un message internet sortant vers un nœud distant par l'intermédiaire du dispositif terminal satellite, le nœud distant étant associé à un opérateur du réseau de communications par satellite et le message internet sortant indiquant l'identifiant de terminal du dispositif terminal satellite ;
la réception (306), en réponse à l'envoi du message internet sortant, d'un message internet entrant en provenance du nœud distant par l'intermédiaire du dispositif terminal satellite, le message internet entrant indiquant une région dans laquelle le dispositif terminal satellite est situé ;
la sélection (308) des paramètres régionaux sur la base de la région indiquée dans laquelle le dispositif terminal satellite est situé ; et
le passage (310) d'un fonctionnement avec les paramètres par défaut à un fonctionnement avec les paramètres régionaux, ledit passage concernant l'une ou les deux d'une puissance de transmission radio du routeur sans fil et des fréquences radio utilisées par le routeur sans fil.

2. Procédé de la revendication 1, ledit message internet entrant comprenant un justificatif d'identité, et ledit procédé comprenant en outre l'utilisation du justificatif d'identité pour établir une connexion sécurisée avec le nœud distant, et éventuellement, ledit procédé comprenant en outre :
le rétablissement de la connexion sécurisée avec le nœud distant en réponse à une interruption de la connexion sécurisée, l'obtention à nouveau d'un identifiant de terminal à partir d'un dispositif terminal satellite (14) qui est ensuite localement couplé au routeur sans fil, et la poursuite de l'utilisation des paramètres régionaux en réponse à la réception, par l'intermédiaire de la connexion sécurisée rétablie, d'informations en provenance du nœud distant qui indiquent que la région n'a pas changé.

3. Procédé de la revendication 2, comprenant en outre, en réponse à la perte de la connexion sécurisée, la poursuite de l'utilisation des paramètres régionaux jusqu'à ce que le routeur sans fil redémarre ou soit éteint.

4. Procédé de l'une quelconque des revendications 1 à 3, ladite réalisation de l'attribution d'adresse IP comprenant la réalisation d'une procédure de protocole de configuration dynamique des hôtes, DHCP, vers le dispositif terminal satellite pour obtenir l'adresse IP et l'obtention de l'identifiant de terminal comprenant l'interrogation du dispositif terminal satellite par l'intermédiaire du protocole de transfert hypertexte sécurisé, HTTPS, pour l'identifiant de terminal.

5. Procédé de l'une quelconque des revendications 1 à 4, ladite obtention de l'identifiant de terminal comprenant l'obtention d'une adresse de commande d'accès au support, MAC, du dispositif terminal satellite ou l'obtention d'un identifiant qui est basé sur l'adresse MAC du dispositif terminal satellite.

6. Procédé de l'une quelconque des revendications 1 à 5, comprenant en outre le retour des paramètres régionaux aux paramètres par défaut lors du redémarrage.

7. Procédé de la revendication 1, comprenant en outre :
le passage en retour des paramètres régionaux aux paramètres par défaut en réponse à la réception d'un signal de réinitialisation ;
le passage en retour des paramètres régionaux aux paramètres par défaut en réponse à la détection que le routeur sans fil a été connecté à un nouveau dispositif terminal satellite ; ou
le passage en retour des paramètres régionaux aux paramètres par défaut en réponse à la détection, durant une procédure de mise sous tension du routeur sans fil, que le routeur sans fil a été mis hors tension pendant plus d'une durée définie.

8. Routeur sans fil (10) comprenant : un montage de circuits d'interface de communication (42) ; et un montage de circuits de traitement (40) qui sert, avec le montage de circuits d'interface de communication, à réaliser le procédé selon une ou plusieurs des revendications 1 à 7.

9. Procédé de fonctionnement par un nœud qui est associé à un opérateur d'un réseau de communications par satellite (18), le procédé comprenant :
la réception (402) d'un message internet entrant en provenance d'un routeur sans fil distant qui est couplé au réseau de communications par satellite par l'intermédiaire du dispositif terminal satellite
qui est local au routeur sans fil, le message internet entrant indiquant un identifiant de terminal du dispositif terminal satellite ;
la détermination (404) d'une région dans laquelle le dispositif terminal satellite est situé ; et l'envoi (406) d'un message internet sortant vers le routeur sans fil en réponse à la réception du message internet entrant, le message internet sortant indiquant la région du dispositif terminal satellite et permettant au routeur sans fil de passer d'un fonctionnement avec des paramètres par défaut à un fonctionnement avec des paramètres régionaux sur la base de la région indiquée du dispositif terminal satellite.

10. Procédé de la revendication 9, comprenant en outre l'envoi du message internet sortant à la condition que le dispositif terminal satellite est un dispositif terminal satellite autorisé.

11. Procédé de la revendication 9 ou 10, comprenant en outre :
l'inclusion d'un justificatif d'identité dans le message internet sortant ; et l'établissement ultérieur d'une connexion sécurisée avec le routeur sans fil, sur la base du justificatif d'identité.

12. Procédé de la revendication 11, comprenant en outre la tentative de rétablissement de la connexion sécurisée en réponse à une interruption de la connexion sécurisée et, en réponse au rétablissement de la connexion sécurisée, la réception d'un identifiant de terminal en provenance du routeur sans fil pour un dispositif terminal satellite auquel le routeur sans fil est ensuite connecté, et l'envoi d'une indication de la région dans laquelle le dispositif terminal satellite alors connecté est situé.

13. Procédé de l'une quelconque des revendications 9 à 12, comprenant en outre la détermination de la région dans laquelle le dispositif terminal satellite est situé sur la base de la détermination d'une identité de faisceau d'un faisceau de desserte du dispositif terminal satellite dans le réseau de communications par satellite.

14. Procédé de l'une quelconque des revendications 9 à 12, comprenant en outre la détermination de la région dans laquelle le dispositif terminal satellite est situé en accédant à une base de données qui relie les identifiants de terminal aux régions dans lesquelles les dispositifs terminaux satellites correspondants sont situés.

15. Noeud (32) qui est associé à un opérateur d'un réseau de communications par satellite (18), le nœud comprenant :
un montage de circuits d'interface de communication (52) ; et
un montage de circuits de traitement (50) configurés, avec le montage de circuits d'interface de communication, pour réaliser le procédé de l'une ou de plusieurs des revendications 9 à 14.
